# EUROPÄISCHE PATENTANMELDUNG

(11) **EP 3 626 578 A1**
(43) Veröffentlichungstag der Anmeldung: **25.03.2020**
(21) Anmeldenummer: 19198348.5
(22) Anmeldetag: 19.09.2019
(51) Int. Cl.: B62B 7/06, B62B 9/26

(54) **RAHMEN**

(30) Priorität: 20.09.2018 DE 102018123160
(71) Anmelder: Emmaljunga Barnvagnsfabrik AB, 28268 Vittsjö (SE)
(72) Erfinder: PERSSON, Christian, 28268 Vittsjö (SE)
(74) Vertreter: Müller Schupfner & Partner Patent- und Rechtsanwaltspartnerschaft mbB

(57) **Zusammenfassung**

Betrifft einen Rahmen, umfassend einen ersten Rahmenteil (1), einen zweiten Rahmenteil (2) und einen dritten Rahmenteil (3), welche in zumindest einer Gelenkeinheit (4) miteinander verbunden sind, wobei in einem ersten Zustand der Gelenkeinheit der erste Rahmenteil in seinem gelenkseitigen Ende um eine erste Schwenkachse (S1) schwenkbar an der Gelenkeinheit gelagert ist und der dritte Rahmenteil in seinem gelenkseitigen Ende um eine zweite Schwenkachse (S2) schwenkbar an der Gelenkeinheit gelagert ist, wobei die erste Schwenkachse von der zweiten Schwenkachse beabstandet ist, wobei Sicherungsmittel vorgesehen sind, welche in einem zweiten Zustand der Gelenkeinheit eine Schwenkbewegung des ersten und des dritten Rahmenteils relativ zur Gelenkeinheit verhindern, wobei der zweite Rahmenteil im ersten und zweiten Zustand gegen Verschwenken gesichert an der Gelenkeinheit festgelegt ist, wobei die Sicherungsmittel zumindest einen Sicherungsstift (12, 32) und eine Verzahnung (13, 33) an den gelenkseitigen Enden des ersten und des dritten Rahmenteils umfassen.

## Beschreibung

Die vorliegende Erfindung betrifft einen Rahmen, insbesondere einen Rahmen für einen Kinderwagen.

Rahmen für Kinderwagen sind aus dem Stand der Technik bereits bekannt. Dabei sind diese Rahmen üblicherweise faltbar ausgelegt, sodass die Rahmen von einem ausgeklappten Betriebszustand in einen zusammengeklappten bzw. zusammengefalteten Lager- oder Transportzustand gebracht werden können. An den aus dem Stand der Technik bekannten Rahmen hat es sich jedoch als nachteilig erwiesen, dass insbesondere im ausgeklappten Betriebszustand aufgrund der zueinander beweglichen, insbesondere schwenkbaren oder verschiebbaren, Rahmenteile die Gesamtstabilität des Rahmens unzureichend ist. Dabei hat es sich gezeigt, dass der Teil des Rahmens an welchem der Handgriff zum Festhalten, Schieben und Anheben des Kinderwagens vorhanden ist, große Relativbewegungen zum Rest des Kinderwagens erlaubt. Weiterhin ist auch das Auseinanderklappen der aus dem Stand der Technik bekannten Kinderwagen zu auswendig und oft nur unter Einsatz beider Hände möglich.

Aufgabe der vorliegenden Erfindung ist es, einen faltbaren Rahmen bereitzustellen, welcher besonders stabil ist und die Relativbewegungen einzelner Rahmenteile zueinander minimiert.

Diese Aufgabe wird gelöst mit einem Rahmen gemäß Anspruch 1. Weitere Vorteile und Merkmale der vorliegenden Erfindung ergeben sich aus den abhängigen Ansprüchen.

Erfindungsgemäß umfasst der Rahmen einen ersten Rahmenteil, einen zweiten Rahmenteil und einen dritten Rahmenteil, welche in zumindest einer Gelenkeinheit miteinander verbunden sind, wobei in einem ersten Zustand der Gelenkeinheit der erste Rahmenteil in seinem gelenkseitigen Ende um eine erste Schwenkachse schwenkbar an der Gelenkeinheit gelagert ist und der dritte Rahmenteil in seinem gelenkseitigen Ende um eine zweite Schwenkachse schwenkbar an der Gelenkeinheit gelagert ist, wobei die erste Schwenkachse von der zweiten Schwenkachse beabstandet ist, wobei Sicherungsmittel vorgesehen sind, welche in einem zweiten Zustand der Gelenkeinheit eine Schwenkbewegung des ersten und des dritten Rahmenteils relativ zur Gelenkeinheit verhindern, wobei der zweite Rahmenteil im ersten und zweiten Zustand gegen Verschwenken gesichert an der Gelenkeinheit festgelegt ist, wobei die Sicherungsmittel zumindest einen Sicherungsstift und/oder eine Verzahnung an den gelenkseitigen Enden des ersten und des dritten Rahmenteils umfassen. Die Hauptkomponenten des erfindungsgemäßen Rahmens sind ein erster Rahmenteil, ein zweiter Rahmenteil und ein dritter Rahmenteil, wobei alle drei Rahmenteile in einer Gelenkeinheit festgelegt sind. Insbesondere bevorzugt sind die Rahmenteile im Wesentlichen U-förmig ausgebildet und weisen jeweils an ihren distalen Enden des U's gelenkseitige Enden auf, welche in eine Gelenkeinheit eingreifen und an dieser festgelegt sind. In diesem Fall sind also vorzugsweise zwei Gelenkeinheiten vorgesehen, welche im Rahmen der vorliegenden Erfindung identische Eigenschaften aufweisen sollen. Es wird daher an dieser Stelle nur auf die Beschreibung der jeweils einzelnen Gelenkeinheit im Eingriff mit dem jeweils einzelnen distalen Ende eines Rahmenteils eingegangen. Die Gelenkeinheit ist ein im Wesentlichen T-förmig ausgebildeter Körper, wobei an dem nach unten weisenden Ende des T's vorzugsweise der zweite Rahmenteil festgelegt ist und an dem "Querbalken" des T's der erste und der dritte Rahmenteil festgelegt sind. In einem ersten Zustand der Gelenkeinheit lässt diese eine Schwenkbewegung des ersten und des dritten Rahmenteils relativ zur Gelenkeinheit um jeweils eine Schwenkachse zu. Der erste Rahmenteil schwenkt dabei um eine erste Schwenkachse und der zweite Rahmenteil um eine zweite Schwenkachse, wobei die erste und die zweite Schwenkachse voneinander derart beabstandet sind, dass im zusammengefalteten Zustand des Rahmens, der erste Rahmenteil vorzugsweise bündig an den zweiten Rahmenteil anschlägt und der dritte Rahmenteil vorzugsweise ebenfalls auf der dem ersten Rahmenteil gegenüberliegenden Seite bündig an dem zweiten Rahmenteil zur Anlage gelangen kann. Die Gelenkeinheit ist dabei mit Vorteil derart ausgebildet, dass die beiden Aufhängungspunkte des ersten und des dritten Rahmenteils derart voneinander beabstandet sind, dass im zusammengefalteten Zustand der erste und der dritte Rahmenteil im Wesentliche parallel zueinander angeordnet sein können. Im Wesentlichen parallel bedeutet in diesem Zusammenhang, dass zwischen den Rahmenteilen ein Winkel von maximal 10°, vorzugsweise von maximal 5° aufgespannt ist.öä# Der erste Zustand der Gelenkeinheit erlaubt somit das Zusammenfalten des Rahmens durch Verschwenken des ersten und des dritten Rahmenteils auf den zweiten Rahmenteil zu. Der zweite Zustand der Gelenkeinheit ist vorzugsweise im ausgeklappten, betriebsbereiten Zustand des Rahmens vorgesehen, wobei in diesem Zustand die Gelenkeinheit über Sicherungsmittel eine Verschwenkung des ersten und des dritten Rahmenteils relativ zur Gelenkeinheit und somit auch relativ zum zweiten Rahmenteil verhindert. Der zweite Rahmenteil ist vorzugsweise form- und/oder kraftschlüssig an der Gelenkeinheit derart festgelegt, dass er nicht relativ zur Gelenkeinheit schwenkbar oder verlagerbar ist. Mit Vorteil ist der zweite Rahmenteil in eine Aussparung an der Gelenkeinheit eingesteckt und zusätzlich formschlüssig am Herausrutschen aus der Gelenkeinheit gesichert. Die Sicherungsmittel, welche den ersten und den dritten Rahmenteil gegen Verschwenkung relativ zur Gelenkeinheit sichern, sind erfindungsgemäß zumindest ein Sicherungsstift und eine Verzahnung an den gelenkseitigen Enden des ersten und des dritten Rahmenteils. Dabei ist die Verzahnung dafür ausgelegt, eine Verschwenkbewegung des ersten Rahmenteils auf den dritten Rahmenteil zu übertragen und gleichzeitig eine Sicherung gegen Verschwenken des ersten Rahmenteils ebenfalls an den dritten Rahmenteil zu übertragen. Die Verzahnung übernimmt dabei zusätzlich auch die Funktion eines Anschlages, da im Endbereich der Verzahnung ein Anschlagen des ersten Rahmenteils und des dritten Rahmenteils stattfindet, sodass eine weitere Verschwenkung der Rahmenteile relativ zur Gelenkeinheit nicht möglich ist. Weiterhin ist ein Sicherungsstift vorgesehen, welcher formschlüssig eine Verdrehung zumindest eines der Rahmenteile relativ zur Gelenkeinheit verhindert. Mit Vorteil sind eine Vielzahl von Sicherungsstiften vorgesehen, welche an sowohl dem ersten Rahmenteil als auch dem dritten Rahmenteil im formschlüssigen Eingriff gebracht werden können, um eine Verschwenkung der Rahmenteile relativ zur Gelenkeinheit und relativ zueinander zu verhindern. Durch die doppelte Sicherung der Rahmenteile gegen Verschwenkung relativ zur Gelenkeinheit ist eine besonders hohe Steifigkeit des Rahmens im zweiten Zustand der Gelenkeinheit möglich, welcher eine hohe Gesamtstabilität des Rahmens im Betriebszustand, also im ausgeklappten Zustand, ermöglicht. Durch die geometrische Überbestimmung der an den jeweils einander haltenden Bauteile wirkenden Kräfte ergibt sich ein Spannungs- bzw. Vorspannungszustand, welcher dafür sorgt, dass die drei Rahmenteile spielfrei gegen Verdrehung und sonstige Verlagerung zueinander gesichert sind

Mit Vorteil ist am gelenkseiteigen Ende des ersten Rahmenteils eine erste Verzahnung ausgebildet, welche in eine am gelenkseiteigen Ende des dritten Rahmenteils ausgebildete zweite Verzahnung formschlüssig eingreift, derart, dass ein Verschwenkung des ersten Rahmenteils um die Schwenkachse einer gegenlaufenden Verschwenkung des dritten Rahmenteils um die zweite Schwenkachse bewirkt, wobei der Betrag der Verschwenkung des ersten Rahmenteils vorzugsweise gleich dem Betrag der Verschwenkung des dritten Rahmenteils ist. Mit Vorteil sind also die Verzahnungen an den jeweiligen gelenkseiteigen Enden des ersten und des dritten Rahmenteils derart miteinander in Eingriff, dass eine bspw. gegen den Uhrzeigersinn laufende Verschwenkung des ersten Rahmenteils einer im Uhrzeigersinn laufende Verschwenkung des dritten Rahmenteils bewirkt und umgekehrt. Das Übersetzungsverhältnis der Verzahnungen ist dabei 1:1, so dass der Winkelbetrag um welchen der erste Rahmenteil verschwenkt wird gleich dem Winkelbetrag ist um welchen der dritten Rahmenteil relativ zur Gelenkeinheit verschwenkt wird. Mittels der Verzahnung vereinfacht sich somit zum einen der Zusammenklappvorgang des Rahmens, da durch ein Verschwenken des ersten Rahmenteils relativ zum zweiten Rahmenteil auch gleichzeitig der dritte Rahmenteil mitverschwenkt wird. Weiterhin bevorzugt sichert die Verzahnung im ausgeklappten Zustand des Rahmens und bei Eingriff von zumindest einem Sicherungsstift den ersten und/oder den dritten Rahmenteil gegen Verschwenkung relativ zur Verschwenkeinheit und erhöht somit die Gesamtstabilität des Rahmens im ausgeklappten Zustand. Darüber hinaus erleichtert die Verzahnung das Ausklappen des Rahmens, welches durch einfaches Anheben des ersten Rahmenteils, an welchem mit Vorteil der Handgriff angeordnet ist, erfolgt. Dabei klappt die Verzahnung den dritten Rahmenteil gemeinsam mit dem ersten Rahmenteil derart aus, dass der Rahmen in seinen Betriebszustand gelangt.

Mit Vorteil liegt die erste und/oder die zweite Verzahnung innerhalb eines um die ersten oder der zweiten Schwenkachse aufgespannten Kreissektors, wobei der Mittelpunktswinkel des Kreissektors zwischen 88° und 130° und bevorzugt 90° bis 100° beträgt. Der Abschnitt zumindest eines der gelenkseitigen Enden des ersten und dritten Rahmenteils in welchem eine Verzahnung ausgebildet ist, spannt somit einen Winkel von minimal 88° und maximal 130° auf. Besonders bevorzugt beträgt der aufgespannte Mittelpunktswinkel, welcher auch als Bogemaß definiert ist, zwischen 90° und 100°. Ein Winkel kleiner 100° begünstigt dabei eine Vorspannung des ersten und/oder dritten Rahmenteils in der ausgeklappten Stellung über die Verzahnung begünstigen, welche die Steifigkeit des Rahmens erhöht. Bei einem Winkel größer 90° und insbesondere größer 100° ist der Bewegungsspielraum der Schwenkbewegung des ersten Rahmenteils gegenüber dem dritten Rahmenteil größer, was eine platzsparendere Anordnung der Rahmenteile im zusammengeklappten Zustand ermöglicht.

Weiterhin bevorzugt weist die Gelenkeinheit zumindest ein Halteelement auf, in welchem eine Haltegeometrie ausgebildet ist, wobei die Haltegeometrie im zweiten Zustand der Gelenkeinheit einen Anschlag für einen Sicherungsstift bildet, wobei zumindest ein Sicherungsstift am gelenkseitigen Ende des ersten Rahmenteils oder am gelenkseitigen Ende des dritten Rahmenteils festgelegt und gegen Verlagerung entlang einer Umfangsrichtung um die jeweilige Schwenkachse zu gelenkseitigen Ende gesichert ist. Die Gelenkeinheit weist vorzugsweise ein Halteelement auf, welches mit Vorteil plattenförmig, also flächig, ausgebildet ist. Besonders bevorzugt weist die Gelenkeinheit zweit Haltelemente auf, von welche jeweils an den beiden gegenüberliegenden Seiten der Gelenkeinheit angeordnet und festgelegt sind. Besonders bevorzugt sind die Halteelemente plattenförmig und dabei einstückig mit dem Grundkörper der Gelenkeinheit ausgebildet, wobei Stifte durch die Gelenkeinheit und insbesondere das oder die Haltelemente hindurchgeschoben werden können, welche die erste und die zweite Schwenkachse definieren. Die Haltegeometrie ist dabei vorzugsweise eine gekrümmte, langlochartige Aussparung an einem der Halteelemente, in welcher ein Sicherungsstift geführt werden kann und am jeweiligen Ende der langlochförmigen Haltegeometrie zum Anschlag gelangt. Ein erster Sicherungsstift ist dabei mit Vorteil am gelenkseitigen Ende des ersten Rahmenteils festgelegt und ein zweiter Sicherungsstift ist mit Vorteil am gelenkseitigen Ende des dritten Rahmenteils festgelegt. Der oder die Sicherungsstifte sind dabei insbesondere gegen Verlagerung relativ zum jeweiligen gelenkseitigen Ende des jeweiligen Rahmenteils in einer Umfangsrichtung um die Schwenkachse relativ zu dem jeweiligen gelenkseitigen Ende gesichert, um in dieser Richtung eine Kraft auf das jeweilige gelenkseitige Ende übertragen zu können, welche des bei Anlage des Sicherungsstiftes an der Haltegeometrie eine Schwenkbewegung des jeweiligen Rahmenteils relativ zur Gelenkeinheit verhindert oder zumindest in einer Richtung begrenzt.

Mit Vorteil ist die Haltegeometrie eine gekrümmte Aussparung, welche sich entlang einer Umfangsrichtung um die jeweilige Schwenkachse erstreckt. Besonders bevorzugt beschreibt die Haltegeometrie somit einen Abschnitt eines Kreises dessen Mittelpunkt auf der ersten oder zweiten Schwenkachse liegt. Entlang dieses Kreisbahnabschnittes ist somit der Sicherungsstift geführt relativ zur Gelenkeinheit verlagerbar.

Besonders bevorzugt ist am ersten Rahmenteil ein erster Sicherungsstift angeordnet, welcher entlang einer Stellachse in eine Schwenkstellung oder eine Blockierstellung bringbar ist, wobei der erste Sicherungsstift in der Blockierstellung in einem angrenzend an die Haltegeometrie vorgesehenen Sicherungsabschnitt eingreift, um das erste Rahmenteil gegen Verschwenken relativ zur Gelenkeinheit zu sichern. Der erste Sicherungsstift ist dabei mit Vorteil durch einen Betätigungsmechanismus entlang der Stellachse relativ zum gelenkseitigen Ende des ersten Rahmenteils verlagerbar. Mit Vorteil verläuft dabei die Stellachse des ersten Sicherungsstiftes parallel zur Haupterstreckungsrichtung des ersten Rahmenteils. In der Blockierstellung steht der Sicherungsstift dabei vorzugsweise nicht mit der Haltegeometrie in Eingriff oder ist in dieser angeordnet, sondern er ist mit Vorteil in einem Sicherungsabschnitt angeordnet, welcher ein Verschwenken des ersten Rahmenteils relativ zur Gelenkeinheit verhindert. Der Sicherungsabschnitt ist dabei mit Vorteil ähnlich zur Haltegeometrie ebenfalls als Aussparung an dem Halteelement der Gelenkeinheit ausgebildet. Vorzugsweise ist dabei sowohl der erste als auch der zweite Sicherungsstift derart ausgelegt, dass er vollständig durch die Gelenkeinheit hindurchragt und mit einem ersten Sicherungsabschnitt und einem zweiten Sicherungsabschnitt an der gegenüberliegenden Seite der Gelenkeinheit in Eingriff bringbar ist. Gleichzeitig sind der oder die Sicherungsstifte mit Vorteil derart ausgelegt, dass sie die Gelenkeinheit derart vollständig durchragen, dass ein Sicherungsstift an seinen gegenüberliegenden distalen Enden jeweils in einer Haltegeometrie eingreift.

Mit Vorteil ist am dritten Rahmenteil ein zweiter Sicherungsstift festgelegt, welcher am ersten Zustand der Gelenkeinheit in der Haltegeometrie geführt verlagerbar ist, und im zweiten Zustand der Gelenkeinheit an der Haltegeometrie zur Anlage gelangt. Im ersten Zustand der Gelenkeinheit ist der zweite Sicherungsstift dabei vorteilhaft innerhalb der Haltegeometrie geführt und verlagerbar, sodass ein Verschwenken des dritten Rahmenteils relativ zur Gelenkeinheit stattfinden kann. Nach dem vollständigen Ausschwenken des dritten Rahmenteils in den ausgeklappten Zustand gelangt der zweite Sicherungsstift dabei vorzugsweise an der Haltegeometrie zur Anlage und stützt diese gegen eine weitere Verschwenkung um die zweite Schwenkachse ab.

Weiterhin bevorzugt ist zumindest eine Stützeinheit vorgesehen, welche ein erstes Stützelement und ein zweites Stützelement aufweist, wobei das erste Stützelement um eine dritte Schwenkachse schwenkbar am zweiten Rahmenteil festgelegt ist und wobei das zweite Stützelement um eine vierte Schwenkachse schwenkbar am dritten Rahmenteil festgelegt ist, wobei die dritte und die vierte Schwenkachse von der Gelenkeinheit beabstandet sind, wobei das erste Stützelement und das zweite Stützelement in einem Stützgelenk schwenkbar aneinander festgelegt sind, wobei eine Stützsicherung vorgesehen ist, welche die Verschwenkung der Stützelemente zueinander in zumindest einer Schwenkrichtung begrenzt. Die Stützeinheit fungiert dabei mit Vorteil als Strebe zwischen dem zweiten Rahmenteil und dem Rahmenteil. Diese Strebe ist, um den Rahmen zusammenklappen zu können, mit einem Stützgelenk ausgestattet, um die beiden Stützelemente der Stützeinheit zusammenklappen zu können und somit eine Klappbewegung des dritten Rahmenteils auf den zweiten Rahmenteil zu zu ermöglichen. In ihrer Funktion als Stützstrebe ist die Stützeinheit mit einer Stützsicherung ausgestattet, welche die Verschwenkung der Stützelemente in zumindest einer Schwenkrichtung begrenzt, vorzugsweise eine Verschwenkung des ersten Stützelements und des zweiten Stützelement zueinander vollständig verhindert. In einer ersten einfachen Ausführungsform ist die Stützsicherung als Anschlag ausgebildet, an welchem eines oder beide der Stützelemente im Bereich des Stützgelenkes zur Anlage gelangen, wenn diese in einer Stellung angeordnet sind, in welcher die Stützelemente den zweiten und den dritten Rahmenteil und insbesondere die dritte und die vierte Schwenkachse derart voneinander beabstanden, dass der Rahmen in seinem ausgeklappten Zustand gehalten wird.

Mit Vorteil weist die Stützsicherung ein parallel zur dritten Schwenkachse und/oder zur vierten Schwenkachse verlagerbares Eingriffselement auf, welches in seiner ersten Stellung mit beiden Stützelementen formschlüssig ein Eingriff steht, um deren Verschwenken zu beschränken und in seiner zweiten Stellung mit zumindest einem der Stützelemente außer Eingriff gebracht ist. Das Eingriffselement ist dabei vorzugsweise über ein Rückstellmittel in der Stellung gehalten, in welcher es mit beiden Stützelementen in Eingriff steht und ein Verschwenken der Stützelemente relativ zueinander verhindert. Durch einfachen Zug an dem Eingriffselement parallel zur dritten und/oder vierten Schwenkachse kann dieses verlagert werden und der formschlüssige Eingriff zwischen den beiden Stützelementen kann aufgehoben werden, sodass ein Verschwenken der Stützelemente im Stützgelenk möglich wird und somit die Stützelemente gemeinsam mit dem zweiten und dem dritten Rahmenteil derart zueinander verschwenkt werden können, dass der Rahmen in seinem zusammengefalteten Zustand gelangt.

Mit Vorteil schließen die Haupterstreckungsachsen der Stützelemente bei Eingriff der Stützelemente mit der Stützsicherung einen kleinsten Winkel ein, welcher kleiner als 180° ist. Mit anderen Worten, sind die Stützelemente somit in dem Zustand in welchem eine Verschwenkung der Stützelemente zueinander verhindert sein soll, nicht kolonial zueinander angeordnet, sondern der zwischen den Haupterstreckungsachsen der Stützelemente eingeschlossene Winkel ist kleiner als 180°. Als Haupterstreckungsachsen werden dabei vorzugsweise die Längsachsen der Stützelemente angesehen entlang, welcher sich der Querschnitt der Stützelemente, im Wesentlichen, nicht ändert.

Besonders bevorzugt stellt die Stützeinheit bei Eingriff der Stützelemente mit der Stützsicherung eine Vorspannkraft zwischen den zweiten Rahmenteil um den dritten Rahmenteil bereit, sodass in diesem Zustand zumindest zumindest ein Sicherungsstift gegen je eine Haltegeometrie und/oder die Verzahnungen in ihren Endbereichen gegeneinander vorgespannt ist/sind. Mittels dieses Merkmals sorgt die Kombination der Sicherungsmittel an der Gelenkeinheit und der Stützeinheit für eine optimale Versteifung des Rahmens. Insbesondere wird dabei der zweite Rahmenteil durch die Stützeinheit derart vom dritten Rahmenteil weg gepresst und vorgespannt, dass der dritte Rahmenteil und der am dritten Rahmenteil vorgesehene Sicherungsstift gegen die Haltegeometrie an der Gelenkeinheit vorgespannt und gehalten ist. Gleichzeitig überträgt die zweite Verzahnung diese Vorspannkraft auch auf die erste Verzahnung und somit auch auf den ersten Rahmenteil, welcher somit ebenfalls in seinem vollständig ausgeklappten Zustand vorgespannt ist. Dabei wird auch der am ersten Rahmenteil vorgesehene Sicherungsstift mit der Haltegeometrie oder mit dem Sicherungsabschnitt derart in Eingriff gehalten, dass eine Verlagerung des ersten Rahmenteils relativ zur Gelenkeinheit auch bei Einwirkung größerer Gegenkräfte am ersten Rahmenteil nicht stattfindet. Bevorzugt findet dabei zusätzlich auch eine Verspannung der Endbereiche der Verzahnungen aneinander statt, so dass auch hierdurch eine weitere Verdrehung des dritten Rahmenbereiches gegenüber dem ersten Rahmenbereich verhindert ist. Der erste Rahmenteil ist dabei vorzugsweise der Teil des Rahmens, an welchem der Handgriff zum Verlagern bzw. Schieben des mit dem Rahmen ausgestatteten Kinderwagens vorhanden ist.

Mit Vorteil wird das Stützgelenk beim Zusammenklappen des Rahmens in eine der Schwerkraft entgegenlaufenden Richtung relativ zur dritten und vierten Schwenkachse verlagert. Mit anderen Worten schwenken die Stützelemente beim Zusammenklappen des Rahmens bezogen auf die Aufstandsfläche des mit dem Rahmen ausgestatteten Kinderwagens nach oben. Dies hat den Vorteil, dass beim Aufklappen des Rahmens, das Stützgelenk gemeinsam mit den Stützelementen von der Schwerkraft getrieben nach unten klappt, so dass die maximale Vorspannkraft welche vom zweiten und dritten Rahmenbereich bei Erreichen einer kolliniearen Ausrichtung der Stützelemente zueinander anliegt, überwunden werden kann und das Stützgelenk sich noch etwas weiter nach unten verlagert, so dass die Haupterstreckungsrichtungen der Stützelemente einen kleinsten Winkel kleiner 180° miteinander aufspannen. Dabei ist dieser kleinste Winkel oberhalb des Stützgelenks angeordnet. Auf diese Weise wird es möglich, den Rahmen mit nur einer Hand und durch das zuvor beschriebene Betätigen am ersten Rahmenbereich aufzuklappen und dabei in einem Zug in den vollständig verspannten und stabilen Zustand zu bringen.

Weitere Vorteile und Merkmale der Erfindung ergeben sich aus der nachfolgenden Beschreibung bevorzugter Ausführungsformen mit Bezug auf die beigefügten Figuren. Einzelne Merkmale, die nur zu einer der Figuren beschrieben sind, können auch Gegenstand von Ausführungsformen anderer Figuren sein, sofern dies nicht explizit ausgeschlossen wurde oder sich auf Grund technischer Gegebenheiten verbietet.

Es zeigen:
- Fig. 1: eine Seitenansicht einer Ausführungsform eines erfindungsgemäßen Rahmens,
- Fig. 2: eine Detailansicht des Rahmens aus Fig. 1,
- Fig. 3 und 4: Detailansichten einer bevorzugten Ausführungsform der Gelenkeinheit,
- Fig. 5: eine perspektivische Ansicht einer bevorzugten Ausführungsform eines erfindungsgemäßen Rahmens, und
- Fig. 6: eine Detailansicht einer bevorzugten Ausführungsform einer Stützeinheit.

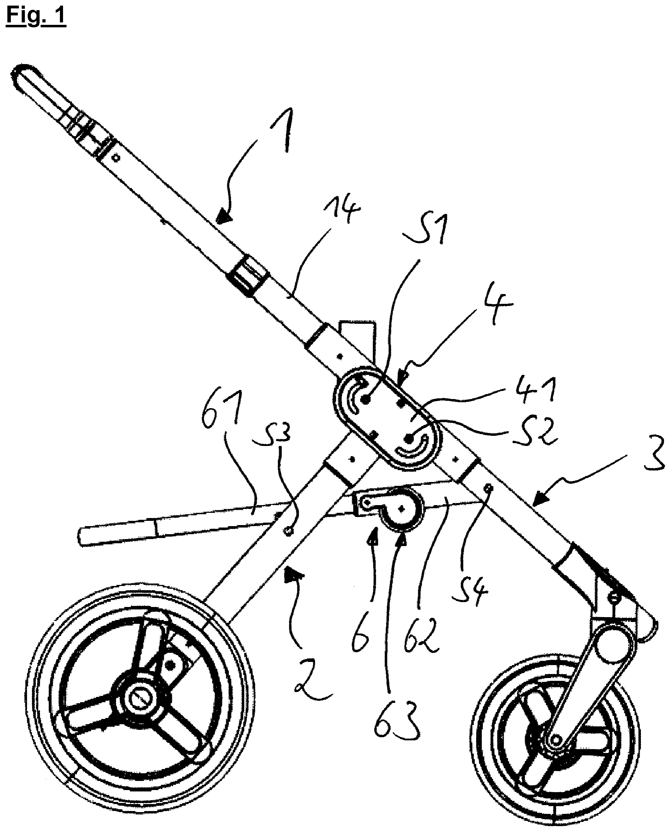

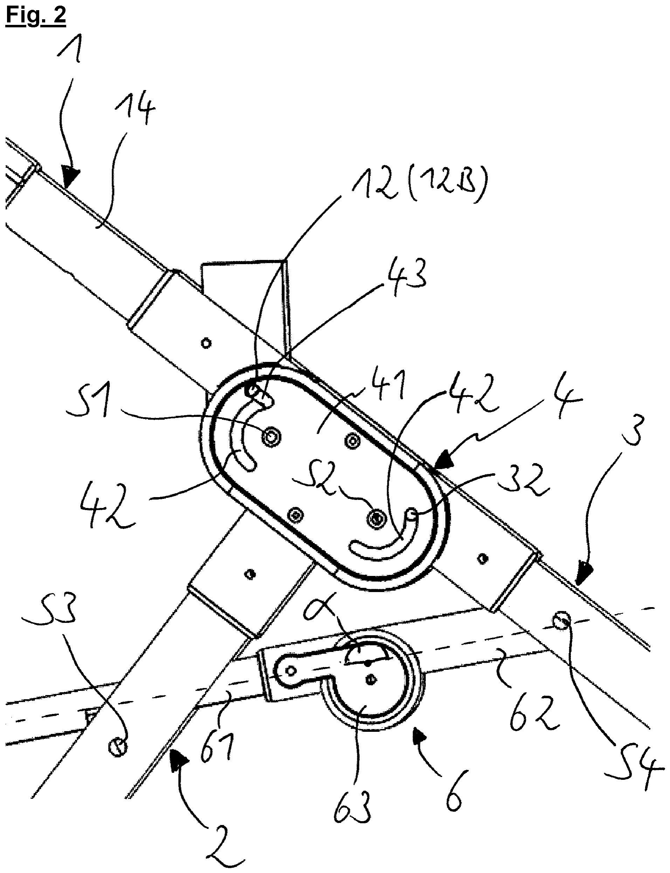

Fig. 1 zeigt eine Ausführungsform eines erfindungsgemäßen Rahmens, wobei an dem Rahmen weitere Bauteile eines mit dem Rahmen ausgestatteten Kinderwagens gezeigt sind. Der Rahmen weist einen ersten Rahmenteil 1, einen zweiten Rahmenteil 2 und einen dritten Rahmenteil 3 auf. Die drei Rahmenteile 1, 2, 3 sind in einer vorzugsweise T-förmig ausgebildeten Gelenkeinheit 4 miteinander verbunden. Dabei ist sind der erste Rahmenteil 1 und der dritte Rahmenteil 3 schwenkbar zur Gelenkeinheit 4 angeordnet und der zweite Rahmenteil 2 ist fixiert, das heißt gegen Verlagerung und Verdrehung relativ zur Gelenkeinheit gesichert, an dieser festgelegt. Zusätzlich zur Verbindung in der Gelenkeinheit 4 sind der zweite und der dritte Rahmenteil 2,3 über eine Stützeinheit 6 mit einander verbunden. Die Stützeinheit 6 weist mit Vorteil ein um eine dritte Schwenkachse S3 schwenkbar an dem zweiten Rahmenteil 2 festgelegtes erstes Stützelement 61 und ein schwenkbar um eine vierte Schwenkachse S4 schwenkbar am dritten Rahmenteil 3 festgelegtes zweites Stützteil 62 auf. Beide Stützelemente 61, 62 sind in einem Stützgelenk 63 schwenkbar zueinander miteinander verbunden. Fig. 1 zeigt den Rahmen im zweiten Zustand der Gelenkeinheit 4, wobei eine Verdrehung des ersten Rahmenteils 1 relativ zur Gelenkeinheit 4 durch einen Sicherungsstift (siehe Fig. 2 - 4) verhindert ist. Weiterhin sichert eine Verzahnung (verdeckt) zwischen dem ersten und dem dritten Rahmenteil 1, 3 den dritten Rahmenteil 3 gegen Verdrehung gegenüber der Gelenkeinheit 4. Darüber hinaus sichert in diesem Zustand auch die Stützeinheit 6 den dritten Rahmenteil 3 gegenüber Verdrehung relativ zum zweiten Rahmenteil 2. Durch die geometrische Überbestimmung der an den jeweils einander haltenden Bauteile wirkenden Kräfte ergibt sich der eingangs beschriebene Vorspannungszustand zwischen den Rahmenteilen 1, 2, 3.

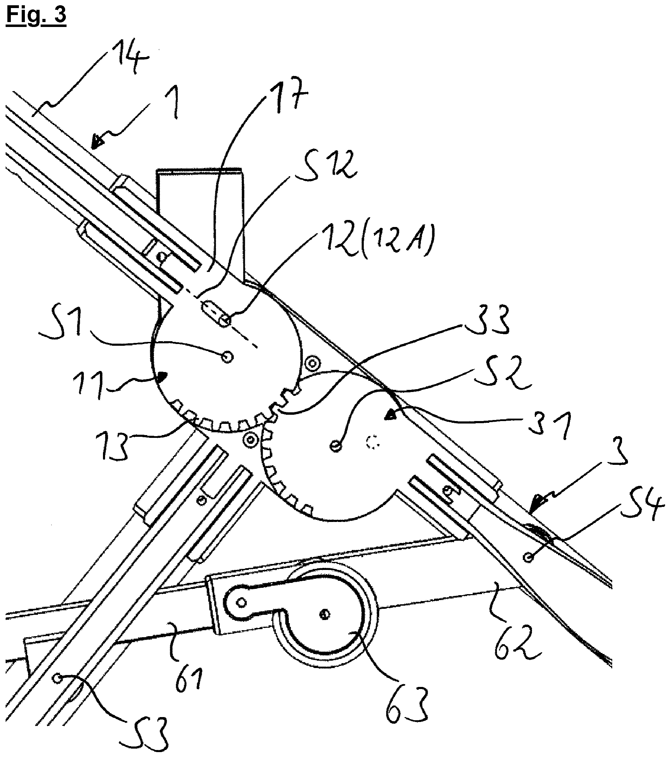

Fig. 2 zeigt eine Detailansicht der Gelenkeinheit 4 aus Fig. 1 und der benachbarten Komponenten im zweiten Zustand. Der zweite Zustand ist insbesondere dadurch gekennzeichnet, dass der erste Sicherungsstift 12 in Eingriff mit einem Sicherungsabschnitt 43 steht. Der Sicherungsabschnitt 43 ist vorzugsweise als Aussparung an einem Halteelement 41 der Gelenkeinheit 4 ausgebildet. Benachbart zum Sicherungsabschnitt 43 ist an dem Halteelement 41 zumindest eine Haltegeometrie 42 ausgebildet, innerhalb derer der erste Sicherungsstift 12 in im ersten Zustand der Gelenkeinheit 4 geführt entlanggleitet. Der erste Sicherungsstift 12 ist an dem gelenkseitigen Ende 11 des ersten Rahmenteils 1 entlang einer Stellachse S12 (siehe Fig. 3) verlagerbar und quer zur Stellachse S12 geführt und zur Kraftübertragung von der Gelenkeinheit 4, insbesondere dem Halteelement 41, an den ersten Rahmenteil 1 in Umfangsrichtung um die erste Schwenkachse S1 ausgelegt. Mit Vorteil weist die Gelenkeinheit 4 zwei Halteelemente 41 mit entsprechenden Haltegeometrien 42 und je einem Sicherungsabschnitt 43 auf, eines davon zum Betrachter gewandt und eines auf der gegenüberliegenden Seite der Gelenkeinheit 4. Mit Vorteil ist an dem gelenkseitigen Ende 31 des dritten Rahmenteils 3 ein zweiter Sicherungsstift 32 festgelegt, welcher analog zum ersten Sicherungsstift 12 in einer Haltegeometrie 42 geführt ist. Während der erste Sicherungsstift 12 im zweiten Zustand in den Sicherungsabschnitt 43 eingreift, gelangt der zweite Sicherungsstift 32 in diesem Zustand an dem Ende der Haltegeometrie 42 zur Anlage und stützt sich ab um den Vorspannungszustand zwischen dem dritten Rahmenteil 3 und der Gelenkeinheit 4 zu unterstützen. Gezeigt ist weiterhin die Stützeinheit 6 in dem Zustand, in welchem die gestrichelt angedeuteten Haupterstreckungsachsen des ersten und des zweiten Stützelements 61, 62 einen kleinsten Winkel α zueinander einnehmen, der keiner als 180° ist. In diesem Zustand der Stützeinheit 6 sorgt die Verspannung des ersten und des zweiten Stützelements 61, 62 miteinander dafür das die Stützeinheit in einer Lage gehalten bleibt, in welcher die längs der Hauptachsen der Stützelemente 61, 62 wirkende Kräfte auf den zweiten und den dritten Rahmenteil 2, 3. Dabei werden der zweite und der dritte Rahmenteil 2, 3 gegenüber der Gelenkeinheit 4 und den dort anliegenden Gegenkräften verspannt. Die um Befestigungs- und Schwenkpunkte der Stützelemente 61, 62 liegen dabei in der dritten und der vierten Schwenkachse S3, S4.

Fig. 3 zeigt eine Ansicht der Gelenkeinheit 4, wobei das Halteelement 41 ausgeblendet ist um den Blick auf die gelenkseitigen Enden 11, 31 des ersten und des dritten Rahmenteils 1, 3 freizugeben. Am gelenkseitigen Ende 11 des ersten Rahmenteils 1 ist mit Vorteil ein Endstück 17 ausgebildet, welches eine erste Verzahnung 13 aufweist. Zu dieser Verzahnung 13 korrespondierend ist am gelenkseitigen Ende 31 des dritten Rahmenteils 3 eine zweite Verzahnung 33 ausgebildet. Die Verzahnungen 13, 33 stehen dabei derart in formschlüssigem Eingriff, dass eine Verschwenkbewegung eines der Rahmenteile 1, 3 unmittelbar auf den anderen Rahmenteil 3, 1 übertragen wird. Fig. 3 zeigt dabei den Zustand, in welchem die Verzahnungen 13, 33 in ihren Endbereichen gegeneinander gehalten werden und eine weitere Verdrehung des ersten Rahmenbereiches 1 im Urzeigersinn und eine weitere Verdrehung des dritten Rahmenteils 3 gegen den Uhrzeigersinn verhindern. Alternativ oder zusätzlich zu dem zumindest einen Sicherungsstift 12, 32 sichern somit bevorzugt die Verzahnungen 13, 33 den ersten Rahmenteil 1 und den dritten Rahmenteil 3 gegen Verdrehung in einer Verdrehrichtung.

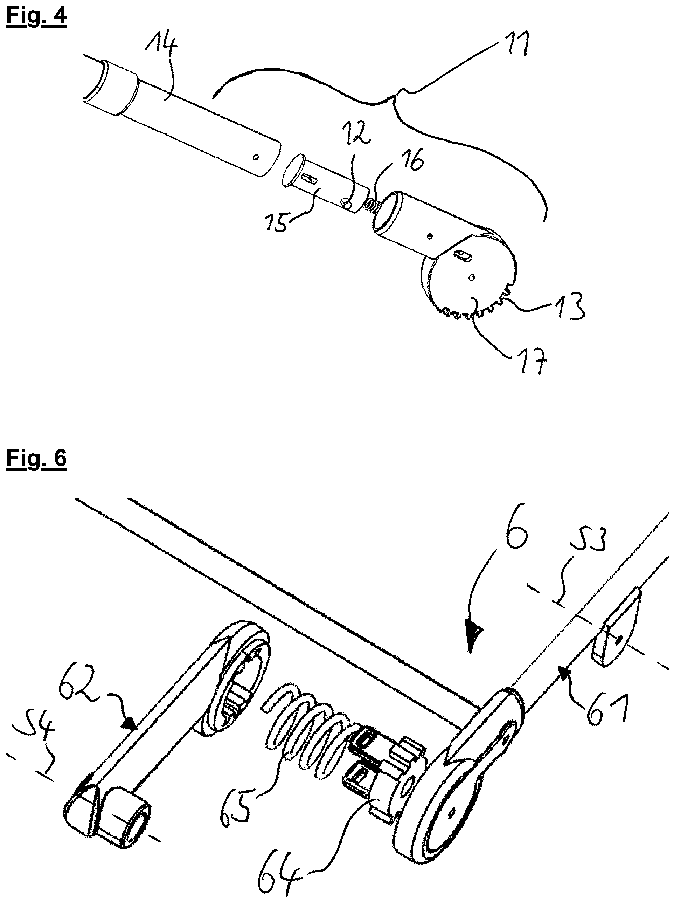

Fig. 4 zeigt eine Detailansicht einer bevorzugten Ausführungsform des gelenkseitigen Endes 11 des ersten Rahmenteils 1 in Explosionsansicht. Dabei ist das Ende des Rahmenrohres 14 vorzugsweise gemeinsam mit einem Betätigungselement 15, an welchem der erste Sicherungsstift 12 festlegbar ist, in ein die Verzahnung aufweisendes Endstück 17 einführbar. Weiterhin ist ein Rückstellelement 16 vorgesehen, welches sich im zusammengebauten Zustand am Endstück 17 abstützt um das Betätigungselement 15 gemeinsam mit dem ersten Sicherungsstift 12 in der von der Verzahnung weg weisenden Richtung mit einer Vorspannung zu beaufschlagen. Diese Vorspannung sorgt dafür, dass der erste Sicherungsstift 12 in einem Sicherungsabschnitt 43 eingeführt und gehalten ist, solange der Anwender des Rahmens nicht eine längs des Rahmenrohres 14 wirkende Betätigungskraft auf das Betätigungselement 15 ausübt, welche die Rückstellkraft des Rückstellelements 16 überwindet. Mit Vorteil ist dabei das Rahmenrohr 15 selbst in das Endstück 17 einschiebbar um eine entsprechende Kraft auf das Betätigungselement 15 zu übertragen und dieses in Richtung der Verzahnung 13 zu drücken, so dass der erste Sicherungsstift außer Eingriff mit dem Sicherungsabschnitt 43 kommt.

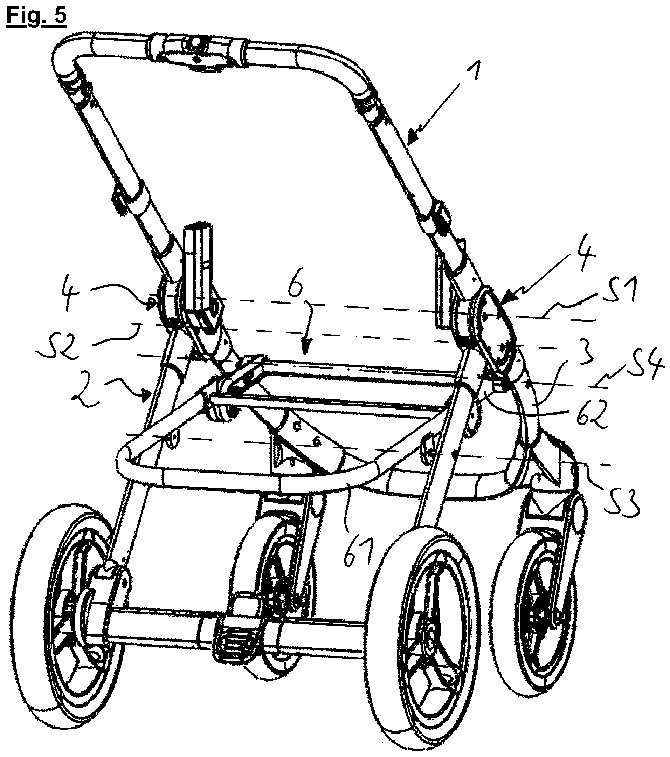

Fig. 5 zeigt eine perspektivische Ansicht auf eine Ausführungsform eines erfindungsgemäßen Rahmens. Mit Vorteil sind der erste und der dritte Rahmenbereich 1, 3 als U-förmige und aus Rohrelementen aufgebaute Rahmenelemente ausgebildet und in zwei identisch ausgebildeten Gelenkeinheiten 4 miteinander verbunden. Am ersten Rahmenbereich 1 ist mit Vorteil ein Handgriff ausgebildet, an welchem ein Anwender anfassen und den mit dem Rahmen ausgestatteten Kinderwagen schieben kann. Der zweite Rahmenbereich 2 weist mit Vorteil zwei Streben auf, welche zur Lagerung der Hinterräder des mit dem Rahmen ausgestatteten Kinderwagens dienen und welche jeweils in einer der Gelenkeinheiten 4 unverlagerbar und gegen Verdrehung gesichert festgelegt sind. In dieser Ansicht ist auch der Verlauf der Schwenkachsen S1, S2, S3, S4 gezeigt, welche mit Vorteil parallel zueinander durch die jeweils rechts und links am Rahmen angeordneten Aufhängungspunkte der Rahmenteile 1, 2, 3 und der Stützeinheit 6 verlaufen. Die Stützeinheit 6 weist ein erstes Stützelement 61 auf, welches mit Vorteil U-förmig ausgebildet ist und insbesondere für die Aufnahme von Gepäck unterhalb des ersten Rahmenbereiches 1 angeordnet ist.

Fig. 6 zeigt eine Explosionsansicht einer bevorzugten Ausführungsform der Stützeinheit 6. Das Stützgelenk 63 setzt sich dabei mit Vorteil aus einem Aufnahmeabschnitt am ersten Stützelement 61 und einem Aufnahmeabschnitt am zweiten Stützelement 62, sowie einem zwischen den Aufnahmeabschnitten angeordneten Element, welches als Stützsicherung 64 fungiert und einer Feder 65, welche die Stützsicherung in Eingriff mit den Aufnahmeabschnitten hält, zusammen. In dem Zustand, in dem die Stützsicherung 64 in formschlüssigem Eingriff mit beiden Aufnahmeabschnitten steht und die Außenverzahnung an der Stützsicherung 64 in korrespondierende Innenverzahnungen an den Aufnahmeabschnitten eingreift, ist eine Verdrehung des ersten Stützelements 61 relativ zum zweiten Stützelement 62 verhindert. Durch Überwinden der Rückstellkraft der Feder 65 lässt sich die Stützsicherung 64 parallel zu den Schwenkachsen S3, S4 verlagern, so dass sie außer Eingriff mit einem der Aufnahmeabschnitte gelangt und eine Verdrehung der Stützelemente 61, 62 zueinander möglich ist. Eine Kraft auf die Stützsicherung 64 kann von einem Anwender beispielsweise mittels eines Zugseils oder eines Bowdenzugs übertragen werden.

### Bezugszeichen:

- 1: - erster Rahmenteil
- 11: - gelenkseitiges Ende erster Rahmenteil
- 12: - erster Sicherungsstift
- 13: - erste Verzahnung
- 14: - Rahmenrohr
- 15: - Betätigungselement
- 16: - Rückstellelement
- 17: - Endstück
- 2: - zweiter Rahmenteil
- 3: - dritter Rahmenteil
- 31: - gelenkseitiges Ende dritter Rahmenteil
- 32: - zweiter Sicherungsstift
- 33: - zweite Verzahnung
- 4: - Gelenkeinheit
- 41: - Halteelement
- 42: - Haltegeometrie
- 43: - Sicherungsabschnitt
- 6: - Stützeinheit
- 61: - erstes Stützelement
- 62: - zweites Stützgelenk
- 63: - Stützgelenk
- 64: - Stützsicherung
- 65: - Feder
- α: - kleinster Winkel
- S1: - erste Schwenkachse
- S2: - zweite Schwenkachse
- S3: - dritte Schwenkachse
- S4: - vierte Schwenkachse

## Patentansprüche

1. Rahmen, umfassend einen ersten Rahmenteil (1), einen zweiten Rahmenteil (2) und einen dritten Rahmenteil (3), welche in zumindest einer Gelenkeinheit (4) miteinander verbunden sind,
wobei in einem ersten Zustand der Gelenkeinheit (4) der erste Rahmenteil (1) in seinem gelenkseitigen Ende (11) um eine erste Schwenkachse (S1) schwenkbar an der Gelenkeinheit (4) gelagert ist und der dritte Rahmenteil (3) in seinem gelenkseitigen Ende (31) um eine zweite Schwenkachse (S2) schwenkbar an der Gelenkeinheit (4) gelagert ist,
wobei die erste Schwenkachse (S1) von der zweiten Schwenkachse (S2) beabstandet ist,
wobei Sicherungsmittel vorgesehen sind, welche in einem zweiten Zustand der Gelenkeinheit (4) eine Schwenkbewegung des ersten und des dritten Rahmenteils (1, 3) relativ zur Gelenkeinheit (4) verhindern,
wobei der zweite Rahmenteil (2) im ersten und zweiten Zustand gegen Verschwenken gesichert an der Gelenkeinheit (4) festgelegt ist,
wobei die Sicherungsmittel zumindest einen Sicherungsstift (12, 32) und/oder eine Verzahnung (13, 33) an den gelenkseitigen Enden (11, 31) des ersten und des dritten Rahmenteils (1, 3) umfassen.

2. Rahmen nach Anspruch 1,
wobei am gelenkseitigen Ende (11) des ersten Rahmenteils (1) eine erste Verzahnung (13) ausgebildet ist, welche in eine am gelenkseitigen Ende (31) des dritten Rahmenteils (3) ausgebildete zweite Verzahnung (33) formschlüssig eingreift, derart, dass eine Verschwenkung des ersten Rahmenteils (1) um die erste Schwenkachse (S1) eine gegenlaufende Verschwenkung des dritten Rahmenteils (3) um die zweite Schwenkachse (S2) bewirkt,
wobei der Betrag der Verschwenkung des ersten Rahmenteils (1) vorzugsweise gleich dem Betrag der Verschwenkung des dritten Rahmenteils (3) ist.

3. Rahmen nach Anspruch 2,
wobei die erste und/oder die zweite Verzahnung (13, 33) innerhalb eines um die ersten oder der zweiten Schwenkachse (S1, S2) aufgespannten Kreissektors liegt,
wobei der Mittelpunktswinkel des Kreissektors zwischen 88° und 130° und bevorzugt zwischen 90° und 100° beträgt.

4. Rahmen nach einem der vorhergehenden Ansprüche,
wobei die Gelenkeinheit (4) zumindest ein Halteelement (41) aufweist, in welchem eine Haltegeometrie (42) ausgebildet ist,
wobei die Haltegeometrie (42) im zweiten Zustand der Gelenkeinheit (4) einen Anschlag für einen Sicherungsstift (12, 32) bildet,
wobei zumindest ein Sicherungsstift (12, 32) am gelenkseitigen Ende (11) des ersten Rahmenteils (1) oder am gelenkseitigen Ende (31) des dritten Rahmenteils (3) festgelegt und gegen Verlagerung entlang einer Umfangsrichtung um die jeweilige Schwenkachse (S1, S2) relativ zum gelenkseitigen Ende (11, 31) gesichert ist.

5. Rahmen nach Anspruch 4,
wobei die Haltegeometrie (42) eine gekrümmte Aussparung ist, welche sich entlang einer Umfangsrichtung um die jeweilige Schwenkachse (S1, S2) erstreckt.

6. Rahmen nach einem der Ansprüche 4 oder 5,
wobei am ersten Rahmenteil (1) ein erster Sicherungsstift (12) angeordnet ist, der entlang einer Stellachse (S12) in eine Schwenkstellung (12A) oder eine Blockierstellung (12B) bringbar ist,
wobei der erste Sicherungsstift (12) in der Blockierstellung (12B) in einem angrenzend an die Haltegeometrie (42) vorgesehenen Sicherungsabschnitt (43) eingreift um das erste Rahmenteil (1) gegen Verschwenken relativ zur Gelenkeinheit (4) zu sichern.

7. Rahmen nach einem der Ansprüche 4 bis 6,
wobei am dritten Rahmenteil (3) ein zweiter Sicherungsstift (32) festgelegt ist, welcher im ersten Zustand der Gelenkeinheit (4) in der Haltegeometrie (42) geführt verlagerbar ist und im zweiten Zustand der Gelenkeinheit (4) an der Haltegeometrie (42) zur Anlage gelangt.

8. Rahmen nach einem der vorhergehenden Ansprüche,
wobei zumindest eine Stützeinheit (6) vorgesehen ist, welche ein erstes Stützelement (61) und ein zweites Stützelement (62) aufweist,
wobei das erste Stützelement (61) um eine dritte Schwenkachse (S3) schwenkbar am zweiten Rahmenteil (2) festgelegt ist,
wobei das zweite Stützelement (62) um eine vierte Schwenkachse (S4) schwenkbar am dritten Rahmenteil (3) festgelegt ist,
wobei die dritte und die vierte Schwenkachse (S3, S4) von der Gelenkeinheit (4) beabstandet sind,
wobei das erste Stützelement (61) und das zweite Stützelement (62) in einem Stützgelenk (63) schwenkbar aneinander festgelegt sind,
wobei eine Stützsicherung (64) vorgesehen ist, welche die Verschwenkung der Stützelemente (61, 62) zueinander in zumindest einer Schwenkrichtung begrenzt.

9. Rahmen nach Anspruch 8,
wobei die Stützsicherung (64) ein parallel zur dritten Schwenkachse (S3) und/oder vierten Schwenkachse (S4) verlagerbares Eingriffselement aufweist, welches in seiner ersten Stellung mit beiden Stützelementen (61, 62) formschlüssig in Eingriff steht um deren Verschwenken zu beschränken und in seiner zweiten Stellung mit zumindest einem der Stützelemente (61, 62) außer Eingriff gebracht ist.

10. Rahmen nach Anspruch 8 oder 9,
wobei die Haupterstreckungsachsen der Stützelemente (61, 62) bei Eingriff der Stützelemente (61, 62) mit der Stützsicherung (64) einen kleinsten Winkel (a) einschließen, der kleiner als 180° ist.

11. Rahmen nach einem der Ansprüche 8 bis 10,
wobei die Stützeinheit (6) bei Eingriff der Stützelemente (61, 62) mit der Stützsicherung (64) eine Vorspannkraft zwischen dem zweiten Rahmenteil (2) und dem dritten Rahmenteil (3) bereitstellt,
so dass in diesem Zustand zumindest ein Sicherungsstift (12, 32) gegen je eine Haltegeometrie (42) und/oder die Verzahnungen (13, 33) in ihren Endbereichen gegeneinander vorgespannt ist/sind.

12. Rahmen nach einem der Ansprüche 8 bis 11,
wobei das Stützgelenk (63) beim Zusammenklappen des Rahmens in eine der Schwerkraft entgegenlaufenden Richtung relativ zur dritten und vierten Schwenkachse (S3, S4) verlagert wird.

13. Rahmen nach einem der vorhergehenden Ansprüche,
wobei die Gelenkeinheit (4) T-förmig ausgebildet ist, derart dass im zusammengefalteten Zustand des Rahmens der erste Rahmenteil (1) bündig an dem zweiten Rahmenteil (2) anschlägt und der dritte Rahmenteil (3) bündig an dem zweiten Rahmenteil (2) zur Anlage gelangt.
